# EUROPÄISCHE PATENTSCHRIFT

(11) **EP 0 478 980 B1**
(45) Veröffentlichungstag und Bekanntmachung des Hinweises auf die Patenterteilung: **18.01.1995**
(21) Anmeldenummer: 91115058.9
(22) Anmeldetag: 06.09.1991
(51) Int. Cl.: C25B 1/12, C25B 15/00

(54) **Verfahren zum Betreiben einer Druckelektrolyseanlage**
Process for operating a pressure electrolysis plant
Procédé de conduite d'une installation d'électrolyse sous pression

(30) Priorität: 19.09.1990 DE 4029634
(43) Veröffentlichungstag der Anmeldung: 08.04.1992
(73) Patentinhaber: Linde Aktiengesellschaft, 65189 Wiesbaden (DE)
(72) Erfinder: Kliem, Erhard, Dipl.-Ing., W-8196 Eurasburg (DE); Glatthaar, Reinhard, Dipl.-Ing., W-8000 München 70 (DE); Kunz, Alfred, Dipl.-Ing., W-8021 Grossdingharting (DE)
(74) Vertreter: Schaefer, Gerhard, Dr.

(56) Entgegenhaltungen:
- CH-A- 153 472
- DE-C- 755 942
- FR-A- 2 608 715
- US-A- 3 652 431

## Beschreibung

Die Erfindung betrifft ein Verfahren zum Betreiben einer Druckelektrolyseanlage zur Zersetzung von Wasser mit elektrischer Energie unter Erzeugung von Wasserstoff und Sauerstoff, wobei der Elektrolysezellenblock innerhalb einer druckfesten Kapselung von Speisewasser, das unter dem Arbeitsdruck der Druckelektrolyse steht, umspült wird.

Aus der DE-PS 755 942 ist ein Verfahren zur elektrolytischen Gewinnung von Wasserstoff und Sauerstoff in einem Druckzersetzer bekannt. Hierbei wird im Gegensatz zu früheren Lösungen vorgeschlagen, daß innerhalb der druckfesten Kapselung, in der sich der Elektrolysezellenblock befindet, Wasser eingefüllt wird bzw. dieser Raum mit Wasser durchströmt wird, wobei die geringe Leitfähigkeit des Wassers ständig aufrecht erhalten wird.

Die DE-PS 755 942 schlägt weiterhin vor, daß im Falle einer Hintereinanderschaltung mehrerer Elektrolyseure diese von Wasser in einem einzigen Kreislauf durchflossen werden. Dabei wäre es zweckmäßig, das Wasser im Zwischenraum zwischen dem Druckkörper und Zellenpaket ständig zu erneuern und es gegebenenfalls nach Reinigung, vorzugsweise Kühlung, wieder zu verwenden. Durch das Hindurchströmen von Wasser wird in einfacher Weise auch eine Kühlung des äußeren Randes des Elektrolysenzellenblocks erzielt. Jedoch ist diese Kühlung des Elektrolysezellenblocks nicht ausreichend, so daß bei bekannten Elektrolyseanlagen die bei der Elektrolyse im Elektrolysezellenblock entstehende Wärme im wesentlichen über die aus dem Elektrolysezellenblock strömenden Produktgas-Elektrolyt-Gemische abgeführt und mittels Wärmetauschern, die in den Abscheidern angeordnet sind, auf Kühlwasser übertragen wird.

Aufgabe der vorliegenden Erfindung ist es, ein Verfahren für den Betrieb von Druckelektrolyseanlagen anzugeben welches die Nachteile des bekannten Standes der Technik vermeidet.

Dies wird erfindungsgemäß dadurch erreicht, daß das Speisewasser im stationären Betrieb durch einen indirekten Wärmetauscher innerhalb der druckfesten Kapselung gekühlt wird.

Das erfindungsgemäße Verfahren verwendet wie der bekannte Stand der Technik ein Druckgehäuse, in welchem sich der Elektrolysezellenblock befindet. Der Elektrolysezellenblock wird hierbei von Speisewasser, das unter dem Arbeitsdruck der Druckelektrolyse steht, umspült. Anders als bei dem bekannten Verfahren wird das Speisewasser im stationären Betrieb durch einen indirekten Wärmetauscher innerhalb der druckfesten Kapselung gekühlt. Nunmehr kann auf ansonsten notwendige Wärmetauscher in den Abscheidern verzichtet werden. Dies bedeutet, daß nur mehr ein Wärmetauscher benötigt wird.

Die Erfindung weiterbildend wird vorgeschlagen, daß das Speisewasser beim Anfahren der Druckelektrolyseanlage durch eine Heizung innerhalb der druckfesten Kapselung beheizt wird.

Mittels dieser Ausgestaltung des erfindungsgemäßen Verfahrens kann die für die Druckelektrolyse benötigte Starttemperatur schneller erreicht werden.

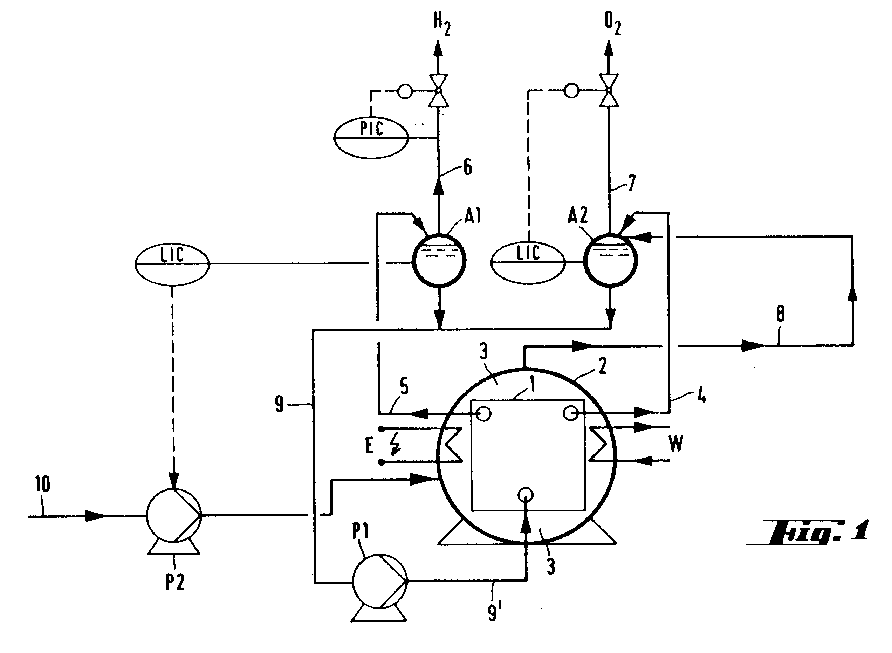

Das erfindungsgemäße Verfahren sei im folgenden anhand der schematischen Figur 1 beispielhaft beschrieben.

Figur 1 zeigt einen Elektrolysezellenblock 1, welcher unter Druck Wasser in Wasserstoff und Sauerstoff spaltet. Dieser Elektrolysezellenblock 1 wird von Speisewasser innerhalb des Druckbehälters 2 umspült. Die bei der Elektrolyse gebildeten Produktgase werden im Elektrolytor getrennt aufgefangen und über die Leitungen 4 und 5 abgeführt. In den Abscheidern A1 und A2 wird mitausgetragener Elektrolyt von den Produktgasen getrennt. Aus Abscheider A1 wird über Leitung 6 Produktwasserstoff abgezogen.

Dessen Abzug erfolgt mittels eines druckgesteuerten Ventils. Der gebildete Sauerstoff wird aus Abscheider A2 durch Leitung 7 über ein niveaugesteuertes Ventil abgezogen. Beide Abscheider sind auf Seiten der abgeschiedenen Flüssigkeit durch kommunizierende Röhren miteinander verbunden. In der davon abführenden Leitung 9 wird abgetrennter Elektrolyt, versetzt mit aufzutrennendem Speisewasser, zurück zum Elektrolyszellenblock 1 geleitet. Dazu wird die Flüssigkeit mittels Pumpe P1 auf den Arbeitsdruck der Elektrolyse gepumpt und mittels Leitung 9' dem Elektrolysezellenblock 1 zugeführt. Über Leitung 10 wird das in der Elektrolyse aufzuspaltende Speisewasser herangeführt und mittels Pumpe P2 auf den Arbeitsdruck der Elektrolyse gepumpt. Danach umspült es als Fluid 3 den Elektrolysezellenblock 1 in der druckfesten Kapselung 2. Um Druckschwankungen gegenüber dem Arbeitsdruck des Elektrolytors 1 auszugleichen erfolgt die Druckregelung über eine Messung des Produktgasdruckes im Wasserstoffabscheider A1. Das Flüssigkeitsniveau im Wasserstoffabscheider A1 wird der Pumpe P2 als Steuerungssignal aufgegeben. Nachdem das Speisewasser den Elektrolytor umströmt hat, wird es über Leitung 8 aus der druckfesten Kapselung 2 abgezogen und dem Elektrolyten in Sauerstoffabscheider A2 zugemischt. Beim Anfahren wird mit Heizung E geheizt, um die Betriebstemperatur zu erreichen. Im stationären Betrieb wird mit Wärmetauscher W gekühlt, um die bei der Elektrolyse freiwerdende Wärme abzuführen.

## Patentansprüche

1. Verfahren zum Betreiben einer Druckelektrolyseanlage zur Zersetzung von Wasser mit elektrischer Energie unter Erzeugung von Wasserstoff und Sauerstoff, wobei der Elektrolysezellenblock innerhalb einer druckfesten Kapselung von Speisewasser, das unter dem Arbeitsdruck der Druckelektrolyse steht, umspült wird, **dadurch gekennzeichnet, daß** das Speisewasser im stationären Betrieb durch einen indirekten Wärmetauscher innerhalb der druckfesten Kapselung gekühlt wird.

2. Verfahren zum Betreiben einer Druckelektrolyseanlage nach Anspruch 1, dadurch gekennzeichnet, daß das Speisewasser beim Anfahren der Druckelektrolyseanlage durch eine Heizung innerhalb der druckfesten Kapselung beheizt wird.

## Claims

1. Process for operating a pressure electrolysis apparatus used to decompose water by means of electric energy into hydrogen and oxygen, wherein the electrolytic cell block inside a pressure-resistant casing is surrounded by feed-water, that is maintained at the working pressure used in the pressure electrolysis, characterized in that during steady-state operation the feed-water is cooled by means of an indirect heat-exchanger located within the pressure-resistant casing.

2. Process for operating a pressure electrolysis apparatus according to claim 1, characterized in that during the start-up of the pressure electrolysis apparatus the feed-water is heated by means of a heater located within the pressure-resistant casing.

## Revendications

1. Procédé de fonctionnement d'une installation d'électrolyse sous pression pour la décomposition de l'eau avec de l'énergie électrique en produisant de l'hydrogène et de l'oxygène, dans lequel le bloc de cellules d'électrolyse est balayé à l'intérieur d'un blindage résistant à la pression par de l'eau d'alimentation qui se trouve à la pression de travail de l'électrolyse sous pression, caractérisé en ce que l'eau d'alimentation est refroidie en fonctionnement stationnaire par un échangeur de chaleur indirect, à l'intérieur du blindage résistant à la pression.

2. Procédé d'exploitation d'une installation d'électrolyse sous pression selon la revendication 1, caractérisé en ce que l'eau d'alimentation, au démarrage de l'installation de l'électrolyse sous pression, est réchauffée par un chauffage à l'intérieur du blindage résistant à la pression.
